# EUROPEAN PATENT SPECIFICATION

(11) **EP 2 117 217 B1**
(45) Date of publication and mention of the grant of the patent: **11.03.2020**
(21) Application number: 08155940.3
(22) Date of filing: 09.05.2008
(51) Int. Cl.: H04M 3/53, H04M 3/533, H04M 3/537

(54) **Voice mail service in communications system**
Voicemail-Dienst in einem Kommunikationssystem
Service de messagerie vocale dans un système de communications

(43) Date of publication of application: 11.11.2009
(73) Proprietor: Telia Company AB, 169 94 Solna (SE)
(72) Inventor: Järvenpää, Marko, 05460 Hyvinkää (FI)
(74) Representative: Kolster Oy Ab

(56) References cited:
- US-A1- 2003 050 046
- US-A1- 2004 121 762
- US-A1- 2007 064 911
- US-B1- 6 970 906

## Description

### FIELD OF THE INVENTION

The invention relates to providing a voice mail service to a user terminal in a communications system.

### BACKGROUND OF THE INVENTION

Voice mail service refers to an electronic mail service by means of which audio messages can be sent, stored, and retrieved. The audio messages include voice recordings that can be used as a telephone answering machine.

However, from the user's point of view, a conventional voice mail system (VMS) provides a service that is not very sophisticated; it merely includes a possibility to press one or two buttons in the user terminal in order to call a voice mail server and listen to a received voice mail message.

There are voice mail solutions that enable providing an advanced visual user interface in the user terminal. However, a problem with these arrangements is that known visual voice mail applications are bound to respective visual voice mail servers, wherein the voice mail application in the user terminal and the voice mail server in the operator network have to be bought from a same vendor.

US 6 970 906 B1 discloses a notification system in which a notification server receives and stores voice mail header information of new messages received for a user. The notification server causes a wireless interface to send a notification to the user's wireless device. A voice mail interface communicates with the voice mail service to retrieve and play back stored voice mail messages in response to user selections via an interactive voice response interface and to request deletion or other handling of the stored voice mail messages. WAP push protocol may be used to send a notification to the user's wireless device. This includes posting XML encoded documents using HTTP protocol. A server-client functionality may include the ability to request and display the user's voice mail header information from store via server.

### BRIEF DESCRIPTION OF THE INVENTION

An object of the present invention is thus to provide a method and a system, user terminal, and network node for implementing the method so as to solve the above problem. The objects of the invention are achieved by a method and an arrangement which are characterized by what is stated in the independent claims. Preferred embodiments of the invention are disclosed in the dependent claims.

The invention is based on the idea of providing an advanced voice mail service to a first user terminal, wherein, if a voice mail node records a voice mail message directed to a first user terminal and received from a second user terminal, a respective put message is transmitted from the voice mail node to a document management node. The put message includes information on the recorded voice mail message. The document management node receiving the put message is arranged to store voice mail history information on the first user terminal, and to transmit, on the basis of the storing, a notify message to the first user terminal. The first user terminal receiving the notify message is arranged to transmit a get message to the document management node. In response to receiving the get message, the document management node is arranged to transmit to the first user terminal a response message including the voice mail history information on the first user terminal. A selected voice mail message can be retrieved from the voice mail node to the first user terminal by utilizing the voice mail history information received in the user terminal.

An advantage of the method and arrangement of the present solution is that it enables utilizing IP multimedia subsystem (IMS) technology as a technology platform for implementing an advanced voice mail service. By means of the present solution, application vendors may implement their visual voice mail applications to be IMS compatible, and system vendors can integrate their voice mail systems to IMS, IMS thus acting as an integration mid-dleware between the application vendor and the system vendor.

### BRIEF DESCRIPTION OF THE DRAWINGS

In the following the invention will be described in greater detail by means of preferred embodiments with reference to the accompanying drawings, in which
Figure 1 is illustrates a communications system according to the present solution;
Figure 2 illustrates signalling according to an embodiment of the present solution;
Figure 3 illustrates signalling according to another embodiment of the present solution;
Figure 4 illustrates signalling according to yet another embodiment of the present solution;
Figure 5 is a flow chart illustrating the functioning of a user terminal according to an embodiment of the present solution;
Figure 6 is a flow chart illustrating the functioning of a document management server node according to an embodiment of the present solution;
Figure 7 is a flow chart illustrating the functioning of a voice mail node according to an embodiment of the present solution.

### DETAILED DESCRIPTION OF THE INVENTION

In the following, embodiments of the present solution will be described with reference to a cellular or wireless communications system, such as a third generation (or beyond 3G) mobile communications system or WLAN (wireless local area network). However, the solution is not meant to be restricted to these embodiments. The present solution is applicable to any user terminal, network node, corresponding component(s), and/or to any communication system or any combination of different communication systems capable of providing a voice mail service. The communication system may be a fixed communication system or a wireless communication system or a communication system utilizing both fixed networks and wireless networks. The protocols used, the specifications of communication systems and network nodes, especially in mobile and wireless communication, develop rapidly. Such development may require extra changes to an embodiment. Therefore, all words and expressions should be interpreted broadly and they are intended to illustrate, not to restrict, the embodiment. The relevant inventive aspect is the functionality concerned, not the network element or equipment where it is executed.

The present solution describes how IMS (IP multimedia subsystem) can be used for implementing a visual voice mail service. The present solution defines interfaces between IMS, an XML document management server XDMS, a voice mail system VMS, and a voice mail application residing in a user equipment. According to the present solution, when a new voice mail message is left to the voice mail system VMS for a user, the voice mail system updates the respective user's voice mail history document in the XML document management server XDMS residing in IMS. The voice mail application in the user equipment is notified on the new voice mail (e.g. the user equipment is informed on a change in the voice mail history document) via IMS, and the voice mail application in the user equipment retrieves a changed voice mail history list from XDMS.

According to an embodiment, the voice mail application may delete voice mails by deleting a voice mail entry from the user's voice mail history document in XDMS. In that case, VMS receives a notification on the deletion and deletes the voice mail from VMS. Thus, when voice mails are deleted on behalf of the user, the respective voice mail history document is updated, and the voice mail application receives a notification on this.

The XML document management system XDMS is used for storing user's messages. In IMS, XDMS is also used for storing resource lists defined by IETF, such as an authorization list (a list of subscribers who are allowed to see the user's presence information) and a subscribed list (a list of users whose presence information the user has subscribed to).

The present solution discloses how XDMS is leveraged for storing information on user's voice mails. The user equipment and the services are connected to XDMS by using XML configuration access protocol XCAP. XCAP allows a client to read, write, and modify application configuration data stored in an XML format on a server. XCAP enables creating and maintaining of documents, or parts of documents, by using operations such as "get", "add", "update", and/or "delete". In addition, XDMS includes a functionality which the user equipment may subscribe to, in order to receive a notification if there has been a change in the user's voice mail history document. The subscription is transmitted via IMS core with SIP SUBSCRIBE method. If the subscription is successful, and if there are any changes in the voice mail history document of the user, XDMS sends a notification via IMS core to the user equipment with SIP NOTIFY method. IMS and XDMS allow the user equipment to use IMS with multiple applications logged in the system at the same time.

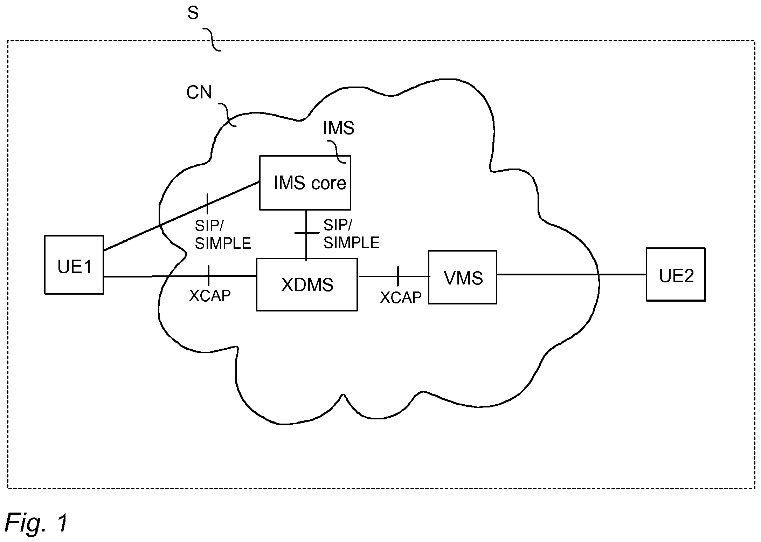

Figure 1 illustrates a communications system S according to a first embodiment of the present solution. Referring to Figure 1, the communications system S comprises a core network CN, such as a core network of a public land mobile network (PLMN), or a wireless local area network (WLAN) operated by a network operator. The system S also comprises a first user terminal UE1 and a second user terminal UE2. In Figure 1, the first and the second user terminal UE1, UE2 are able to connect to each other via the core network CN, by utilizing a suitable access network (e.g. a radio access network (RAN) or WLAN, not shown in Figure 1). The core network CN includes an Internet protocol (IP) multimedia core network subsystem IMS (i.e. an IMS core), and a contacts server such as an extensible markup language (XML) document management server XDMS. The core network CN further includes a voice mail system VMS (and/or a voice mail server VMS). The first user terminal UE1 is able to connect to the IMS core, and to the contacts server XDMS, and the second user terminal UE2 is able to connect to the voice mail system VMS. The IMS core and the voice mail system VMS are able to connect to the contacts server XDMS. The communication interface between UE1 and IMS, as well as the communication interface between IMS and XDMS, are implemented by utilizing SIP (session initiation protocol) and/or SIMPLE (session initiation protocol for instant messaging and presence leveraging extensions). The communication interface between UE1 and XDMS, as well as the communication interface between VMS and XDMS, are implemented by utilizing an XML configuration access protocol XCAP. Figure 1 is a simplified version of a cellular or wireless network structure showing only components necessary for illustrating the present solution, even though those skilled in the art naturally know that a general communications system also comprises other functions and structures, which do not have to be described in more detail herein. Although each network node or function UE1, UE2, IMS, XDMS, VMS, CN has been depicted as one entity, different modules and memory may be implemented in one or more physical or logical entities.

In the following example, a second user terminal UE2 tries to make a voice call to a first user terminal UE1, but the call is forwarded to a voice mail system VMS. The first user terminal UE1 may be e.g. a personal computer (PC) or a mobile device that includes a voice mail client residing in the user terminal UE1. The voice mail system VMS is connected to XDMS. In the present solution, an XML document is created in XDMS for each user (i.e. in this case for UE1) for storing a list of voice mails the user has in the voice mail system. The XML document may be created during provisioning of the voice mail service, or it may be created by the client if it notices that such a document does not exist (i.e. the document may be created by fetching a directory document defined in OMA (open mobile alliance) XDMS 1.0 specifications). An exemplary voice mail history document showing two voice mail entries in the document may be as follows:

```
            <voice-mail-history>
             <voice-mail id="a">
               <from>+35840xxxxxxx</from>
               <date>15/12/2007:10:21</date>
               <duration>0:51</duration>
               <link>xxxxx</link>
             </voice-mail>
             <voice-mail id="b">
               <from>+35840xxxxxxx</from>
               <date>18/12/2007:11:24</date>
               <duration>0:20</duration>
               <link>yyyyy</link>
             </voice-mail>
            </voice-mail-history>
```

A voice mail entry in the above exemplary voice mail history document may include the following elements:
- "from" defines a caller (e.g. UE2),
- "date" defines the date and time the respective voice mail message was left to the voice mail system VMS,
- "duration" defines the duration of the voice mail message,
- "link" provides a link to a respective voice mail message in the voice mail system VMS.

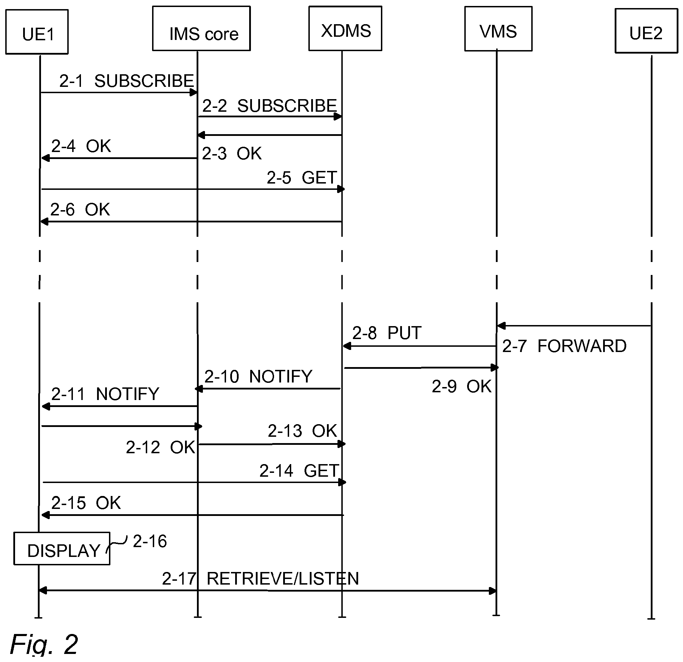

Figure 2 illustrates signalling according to an embodiment of the present solution. Referring to Figure 2, the first user terminal UE1 subscribes to XDMS with a SUBSCRIBE method in order to receive notifications on changes in the user's voice mail history document. This means that a subscribe message 2-1, 2-2 is transmitted from UE1 via IMS core to XDMS. If the subscription is successful, an acknowledgement message 2-3, 2-4 is transmitted from XDMS via IMS core to UE1. UE1 also receives a voice mail history document from XDMS by using a GET method. This means that UE1 transmits a get message 2-5 to XDMS, and then the voice mail history document of the user is sent in a message 2-6 from XDMS to UE1. Next, it is assumed that a second user terminal UE2 tries to make a phone call to UE1 and the call is, for some reason, forwarded 2-7 to the (UE1's) voice mail system VMS. The voice mail system VMS is arranged to record a message in response to the forwarded call 2-7 and to update voice mail history document of UE1 in XDMS. This means that a new voice mail entry is put to voice mail history list of UE1 by transmitting a put message 2-8 from VMS to XDMS. An acknowledgement message 2-9 is transmitted from XDMS to VMS, and XDMS is arranged to notify UE1 on the changed voice mail history list with a NOTIFY method. This means that a notify message 2-10, 2-11 is transmitted from XDMS via IMS core to UE1, which responds by transmitting an acknowledgement message 2-12, 2-13 via IMS core to XDMS. After that, UE1 retrieves the updated voice mail history list from XDMS with a GET method. This means that a get message 2-14 is transmitted from UE1 to XDMS, which responds by transmitting the updated voice mail history list in a message 2-15 to UE1. In step 2-16, the user terminal UE1 is arranged to notify the user on the (new) voice mail(s) e.g. by showing, in UE1's user interface, a list of voice mails stored for UE1 in the voice mail system VMS. The voice mail system VMS may then be accessed by UE1, for example, by fetching one or more of the stored voice mails to UE1, or by UE1 placing a voice call to the voice mail system VMS. This means that a selected voice mail is retrieved from VMS to UE1 in a message 2-17, or a selected voice mail is played to the user of UE1 during a call 2-17 between UE1 and VMS.

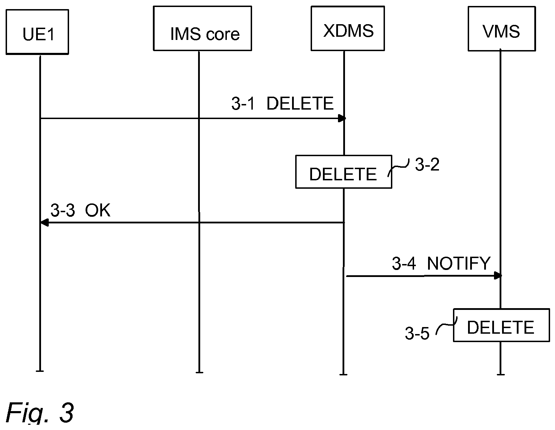

Figure 3 illustrates signalling according to another embodiment of the present solution. Referring to Figure 3, the user may delete a voice mail from the voice mail system VMS by means of the voice mail history document. More specifically, UE1 is able to delete a voice mail entry from voice-mail history list that resides in the XDMS by using a DELETE method. This means that a delete message 3-1 is transmitted from UE1 to XDMS, wherein the delete message includes information on the voice mail entry/entries to be deleted. XDMS is arranged to delete 3-2 the selected voice mail entry/entries from the voice mail history list in response to receiving message 3-1 and to transmit an acknowledgement message 3-3 to UE1. VMS is notified on the deletion by a notification message 3-4 transmitted from XDMS to VMS. On the basis of the notification, VMS fetches the user's changed list (not shown) from XDMS, or the changed list is sent within the notification 3-4. In step 3-5, VMS compares the changed list with a local database, and on the basis of the comparison VMS deletes the voice mail(s) in question from VMS.

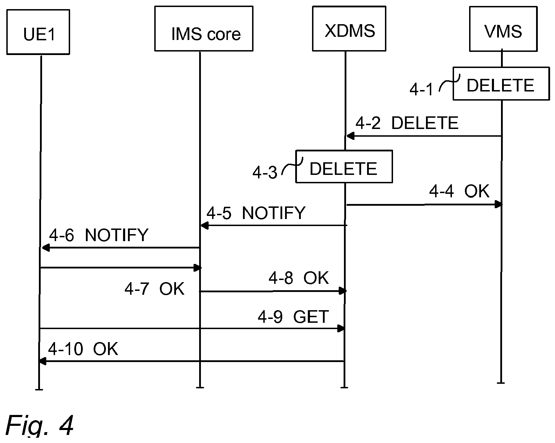

Figure 4 illustrates signalling according to yet another embodiment of the present solution. Referring to Figure 4, the voice mail system VMS may be arranged to automatically delete 4-1 a voice mail after a certain amount of time (e.g. a week, a month, 3 months etc.) has passed from its reception. In that case, a delete message 4-2 is transmitted from VMS to XDMS, and the respective voice mail entry is deleted 4-3 from voice mail history list of UE1 in XDMS. After that an acknowledgement message 4-4 may be transmitted from XDMS to VMS. UE1 is notified on the change with a NOTIFY method. This means that a notify message 4-5, 4-6 is transmitted from XDMS via the IMS core to UE1, and an acknowledgement message 4-7, 4-8 is transmitted from UE1 via the IMS core to XDMS. UE1 fetches the (changed) list from XDMS by using a GET method. This means that a get message 4-9 is transmitted from UE1 to XDMS, wherein the changed voice mail history list is transmitted from XDMS to UE1 in message 4-10.

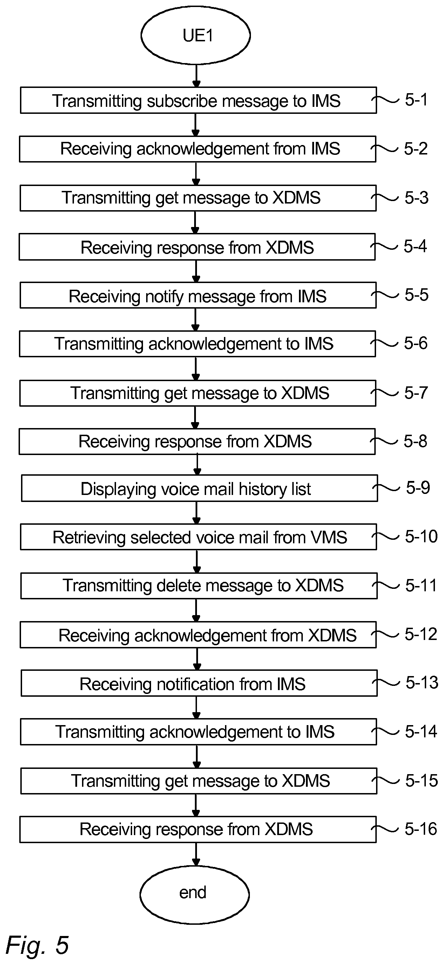

Figure 5 is a flow chart illustrating the functioning of a user terminal UE1 according to an embodiment of the present solution. Referring to Figure 5, the first user terminal UE1 subscribes to XDMS with a SUBSCRIBE method in order to receive notifications on changes in the user's voice mail history document. This means that a subscribe message is transmitted 5-1 from UE1 to the IMS core. In case of a successful subscription, an acknowledgement message is received in step 5-2 from the IMS core. UE1 also receives a voice mail history document from XDMS by using a GET method. This means that a get message is transmitted 5-3 from UE1 to XDMS, and a voice mail history document is received 5-4 from XDMS. Next, it is assumed that a second user terminal UE2 tried to make a phone call to UE1 and the call was, for some reason, forwarded to the (UE1's) voice mail system VMS. UE1 is notified 5-5 on a changed voice mail history list with a NOTIFY method. This means that a notify message is received 5-5 from the IMS core, and UE1 responds by transmitting 5-6 an acknowledgement message to the IMS core. After that, UE1 retrieves the updated voice mail history list from XDMS with a GET method. This means that a respective get message is transmitted 5-7 from UE1 to XDMS, wherein a response is received 5-8 from XDMS, including an updated voice mail history list. In step 5-9, the user terminal UE1 is arranged to notify the user on the (new) voice mail(s) e.g. by showing, in UE1's user interface, a list of voice mails stored for UE1 in the voice mail system VMS. The voice mail system VMS may then be accessed 5-10 by UE1, for example, by fetching one or more of the stored voice mails to UE1, or by UE1 placing a voice call to the voice mail system VMS. This means that a selected voice mail is retrieved 5-10 from VMS to UE1, or a selected voice mail is played 5-10 to the user of UE1 during a call between UE1 and VMS.

The user may delete a voice mail from the voice mail system VMS, by means of the voice mail history document. More specifically, UE1 is able to delete a voice mail entry from the voice-mail history list that resides in the XDMS by using a DELETE method. This means that a delete message is transmitted 5-11 from UE1 to XDMS, wherein the delete message includes information on the voice mail entry/entries to be deleted. In step 5-12, an acknowledgement message regarding deleted voice mail entry/entries is received from XDMS.

The voice mail system VMS may be arranged to automatically delete a voice mail after a certain amount of time (e.g. a week, a month, 3 months etc.) has passed from its reception. In that case, UE1 is notified on the change with a NOTIFY method. This means that a notify message is received 5-13 from the IMS core, and an acknowledgement message is transmitted 5-14 to IMS core. UE1 may fetch 5-15 the (changed) voice mail history list from XDMS by using a GET method. This means that a get message is transmitted 5-15 from UE1 to XDMS, and the changed voice mail history list is received 5-16 from XDMS.

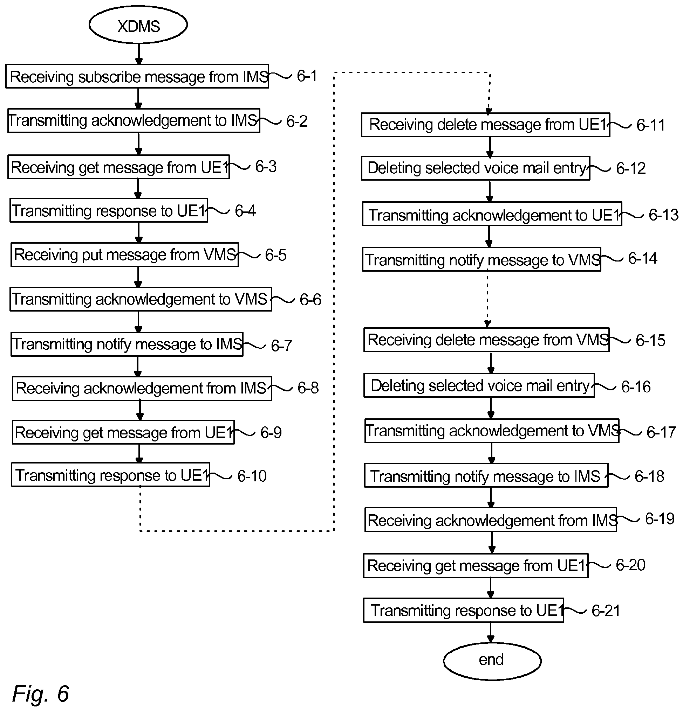

Figure 6 is a flow chart illustrating the functioning of an XML document management server XDMS according to embodiment of the present solution. Referring to Figure 6, the first user terminal UE1 subscribes to XDMS with a SUBSCRIBE method in order to receive notifications on changes in the user's voice mail history document. This means that a subscribe message is received 6-1 from the IMS core. If the subscription is successful, an acknowledgement message is transmitted 6-2 from XDMS to IMS core. XDMS also provides a voice mail history document to UE1 by using a GET method. This means that a get message is received 6-3 from UE1, and the voice mail history document is sent 6-4 UE1. Next, it is assumed that a second user terminal UE2 tried to make a phone call to UE1 and the call was, for some reason, forwarded to the (UE1's) voice mail system VMS. Therefore, UE1's voice mail history document is updated in XDMS. This means that a new voice mail entry is put to the UE1's voice mail history list as a put message is received 6-5 from VMS. An acknowledgement message is transmitted 6-6 from XDMS to VMS, and XDMS is arranged to notify UE1 on the changed voice mail history list with a NOTIFY method. This means that a notify message is transmitted 6-7 from XDMS to the IMS core, and an acknowledgement message is received 6-8 from the IMS core. After that, UE1 may retrieve the updated voice mail history list from XDMS with a GET method. This means that a respective get message is received 6-9 from UE1, and a response including the updated voice mail history list is transmitted 6-10 to UE1.

The user may delete a voice mail from the voice mail system VMS, by means of the voice mail history document. More specifically, UE1 is able delete a voice mail entry from the voice-mail history list that resides in the XDMS, by using a DELETE method. This means that a delete message is received from UE1, the delete message including information on the voice mail entry/entries to be deleted. XDMS is arranged to delete 6-12 the selected voice mail entry/entries from the voice mail history list in response to receiving the delete message and to transmit 6-13 an acknowledgement message to UE1. VMS is notified on the deletion by a notification message transmitted 6-14 to VMS.

The voice mail system VMS may be arranged to automatically delete 4-1 a voice mail after a certain amount of time (e.g. a week, a month, 3 months etc.) has passed from its reception. In that case, a delete message is received 6-15 from VMS and the respective voice mail entry is deleted 6-16 from UE1's voice mail history list in XDMS. After that an acknowledgement message may be transmitted 6-17 to VMS. UE1 is notified on the change with a NOTIFY method. This means that a notify message is transmitted 6-18 from XDMS to the IMS core, and an acknowledgement message is received 6-19 from the IMS core XDMS. UE1 may fetch the (changed) list from XDMS by using a GET method. This means that a get message is received 6-20 from UE1 and the changed voice mail history list is transmitted 6-21 in a response to UE1.

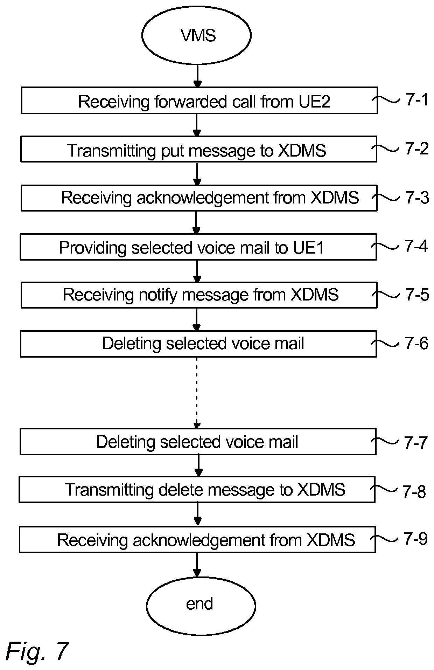

Figure 7 is a flow chart illustrating the functioning of a voice mail system (or a voice mail server) VMS according to embodiment of the present solution. Referring to Figure 7, it is assumed that a second user terminal UE2 tries to make a phone call to a first user terminal UE1 and the call is, for some reason, forwarded to be received 7-1 by the (UE1's) voice mail system VMS. The voice mail system VMS is arranged to record 7-1 a message in response to receiving 7-1 the forwarded call and to update UE1's voice mail history document in XDMS. This means that a new voice mail entry is put to the UE1's voice mail history list by a put message transmitted 7-2 to XDMS. An acknowledgement message may be received from XDMS in step 7-3. The voice mail system VMS may then be accessed by UE1, for example, by VMS receiving 7-4 a request from UE1 regarding one or more of the stored voice mails, or by VMS receiving 7-4 a voice call to the voice mail system VMS. Thus a selected voice mail may be transmitted 7-4 to UE1 in a message, or a selected voice mail may be played 7-4 during a call between UE1 and VMS.

The user may delete a voice mail from the voice mail system VMS, by means of the voice mail history document. More specifically, UE1 is able to delete a voice mail entry from the voice-mail history list that resides in the XDMS by using a DELETE method. VMS is notified on the deletion such that VMS receives 7-5 a notification message from XDMS. On the basis of the notification, VMS may fetch the user's changed list (not shown) from XDMS, or the changed list may be received 7-5 within the notification. In step 7-6, VMS compares the changed list with a local database and, on the basis of the comparison, VMS deletes 7-6 the voice mail(s) in question from VMS.

The voice mail system VMS may be arranged to automatically delete 7-7 a voice mail after a certain amount of time (e.g. a week, a month, 3 months etc.) has passed from its reception. In that case, a delete message is transmitted 7-8 to XDMS. After that an acknowledgement message regarding a deleted voice mail entry may be received 7-9 from XDMS.

By means of the present solution the user of the user terminal UE1 is able to select one or more voice mails that s/he wishes to retrieve or listen to. By means of the voice mail history list the user is able to find out e.g. how many voice mails, when and/or from whom s/he has received, as the information is displayed on the user interface of the use terminal. The voice mails may be selected so as to be retrieved or deleted by the user e.g. by using a mouse or a keyboard. By means of the present solution, the user is able to find out, if desired, about his/her whole voice mail history stored in XDMS, not just the latest voice mails. The voice mail history may be displayed to the user by using an advanced graphical user interface in the user terminal, including information on the caller, time, date, type of call etc. The present solution enables providing an IP multimedia subsystem compatible voice service to a user terminal. The present solution involves storing information on voice mails received in the voice mail system, and providing the information to the respective user terminal for display to the user. The user terminal is arranged to recognise a predetermined action by the user (e.g. the user clicking a specific option with a mouse or pressing a button) and, to initialise, in response to the recognition, a retrieval or deletion of a selected voice mail entry.

The items and steps shown in the figures are simplified and only aim at describing the idea of the present solution. The steps/points, signaling messages and related functions described above in Figures 1 to 7 are in no absolute chronological order, and some of the steps/points may be performed simultaneously or in an order different from the given one. Other functions may also be executed between the steps/points or within the steps/points and other signaling messages sent between the illustrated messages. Some of the steps/points or part of the steps/points can also be left out or integrated together or replaced by a corresponding step/point or part of the step/point. The apparatus operations illustrate a procedure that may be implemented in one or more physical or logical entities. The signaling messages are only exemplary and may even comprise several separate messages for transmitting the same information. The messages serve only as examples and they may contain only some of the information mentioned above. In addition, the messages may also contain other information, and the titles may deviate from those given above. Instead of or in addition to a home network node and/or a visited network node, the above-described operations may be performed in any other element of a communications system.

In addition to prior art means, a system or system network nodes that implement the functionality of the present solution comprise means for providing an advanced visual voice mail service. Existing network nodes and user terminals comprise processors and memory that may be utilized in the operations of the present solution. Any changes necessary in implementing the present solution may be carried out using supplements or updates of software routines and/or routines included in application-specific integrated circuits (ASIC) and/or programmable circuits, such as EPLDs (electrically programmable logic device) or FPGAs (field programmable gate array).

It will be obvious to a person skilled in the art that, as the technology advances, the inventive concept may be implemented in various ways. The invention and its embodiments are not limited to the examples described above but may vary within the scope of the claims.

## Claims

1. A method of providing a voice mail service to a first user terminal (UE1) of a wireless communications system (S), the system (S) comprising an Internet protocol multimedia subsystem (IMS), a document management node (XDMS) and a voice mail node (VMS) capable of recording (7-1) a voice mail message (2-7) received from a second user terminal (UE2),
**characterized by** the method comprising
transmitting (7-2), in response to said recording, a put message (2-8) as an extensible markup language configuration access protocol, XCAP, operation from the voice mail node (VMS) to the document management node (XDMS), the put message including information on the recorded voice mail;
storing (6-5), in response to receiving (6-5) the put message (2-8), the information on the recorded voice mail to voice mail history information on the first user terminal (UE1) in the document management node (XDMS);
transmitting (6-7), in response to said storing, a notify message (2-10, 2-11) as a session initiation protocol, SIP, message or a session initiation protocol for instant messaging and presence leveraging extensions, SIMPLE, message from the document management node (XDMS) via the Internet protocol multimedia subsystem (IMS) to the first user terminal (UE1);
transmitting (5-7), in response to receiving (5-5) the notify message (2-10, 2-11), a get message (2-14) as an XCAP operation from the first user terminal (UE1) directly to the document management node (XDMS);
transmitting (6-10), in response to receiving (6-9) the get message (2-14), a response message (2-15) from the document management node (XDMS) directly to the first user terminal (UE1), the response message being an XCAP operation acknowledging the get message and including the voice mail history information on the first user terminal (UE1);
receiving (2-16, 5-9) the response message comprising the voice mail history information in the first user terminal (UE1);
displaying (2-16, 5-9), in response to the receiving (2-16, 5-9) of the response message, the received voice mail history information to the user of the first user terminal (UE1); and
retrieving (2-17, 5-10), in response to recognising a predetermined action by the user, a selected voice mail message from the voice mail node (VMS) to the first user terminal (UE1) using a link to the selected voice mail message in the voice mail node (VMS), the link being comprised in the voice mail history information received in the first user terminal (UE1) from the document management node (XDMS).

2. A method according to claim 1, **characterized by**
retrieving (2-17, 5-10) the voice mail message in a message transmitted between the voice mail node (VMS) and the first user terminal (UE1); and/or
playing (2-17, 5-10) the voice mail message during a call between the voice mail system (VMS) and the first user terminal (UE1).

3. A method according to claim 1 or 2, **characterized by**
transmitting (5-11) a first delete message (3-1) from the first user terminal (UE1) to the document management node (XDMS), the first delete message including information on a voice mail entry to be removed from the voice mail history information;
removing (3-2, 6-11), in response to receiving (3-2, 6-11) the first delete message (3-1), the respective voice mail entry from the voice mail history information stored in the document management node (XDMS);
transmitting (6-14), on the basis of the removing, a notification (3-4) from the document management node (XDMS) to the voice mail node (VMS); and
removing (7-6), in response to receiving (3-5) the notification (3-4) in the voice mail node (VMS), the respective voice mail message from the voice mail node (VMS).

4. A method according to any one of claims 1 to 3, **characterized by**
deleting (4-1, 7-7), on the basis of predetermined criteria, a voice mail message from the voice mail node (VMS);
transmitting (7-8), in response to the deleting (4-1), a second delete message (4-2) from the voice mail node (VMS) to the document management node (XDMS);
deleting (4-3, 6-16), in response to receiving (6-15) the second delete message (4-2), a respective voice mail entry from the voice mail history information stored in the document management node (XDMS);
transmitting (6-18) in response to deleting (4-3, 6-16) the voice mail entry, a respective notification (4-5, 4-6) to the respective user terminal (UE1);
transmitting (5-15), in response to receiving (5-13) said respective notification (4-5, 4-6), a get message (4-9) from the respective user terminal (UE1) to the document management node (XDMS);
transmitting (6-21), in response to receiving (6-20) the get message (4-9), a respond message (4-10) from the document management node (XDMS) to the respective user terminal (UE1), the respond message including voice mail history information on the respective user terminal (UE1).

5. A method according to any one of claims 1 to 4, **characterized by** updating a user-terminal-specific voice mail history document stored in the document management node (XDMS); and
providing the updated voice mail history document to the first user terminal.

6. A method according to any of claims 1 to 5, **characterized by**
transmitting (5-1) a subscribe message (2-1, 2-2) from the first user terminal (UE1) to the document management node (XDMS); and
creating, in response to receiving (6-1) the subscribe message in the document management node (XDMS), a voice mail history document for the first user terminal (UE1), wherein the method comprises
transmitting, in response to receiving (6-3) a get message (2-5) in the document management node (XDMS) from the first user terminal (UE1), the created voice mail history document to the first user terminal (UE1).

7. A wireless communications system (S) comprising an Internet protocol multimedia subsystem (IMS), a document management node (XDMS) and a voice mail node (VMS) capable of recording (7-1) a voice mail message (2-7) directed to a first user terminal and received from a second user terminal (UE2),
**characterized in that** the system (S) is configured to
transmit, in response to said recording, a put message as an extensible markup language configuration access protocol, XCAP, operation from the voice mail node (VMS) to the document management node (XDMS), the put message including information on the recorded voice mail;
store, in response to receiving the put message, the information on the recorded voice mail to voice mail history information on the first user terminal (UE1) in the document management node (XDMS);
transmit, in response to said storing, a notify message as a session initiation protocol, SIP, message or a session initiation protocol for instant messaging and presence leveraging extensions, SIMPLE, message from the document management node (XDMS) via the Internet protocol multimedia subsystem (IMS) to the first user terminal (UE1);
transmit, in response to receiving the notify message, a get message as an XCAP operation from the first user terminal (UE1) directly to the document management node (XDMS);
transmit, in response to receiving the get message, a response message from the document management node (XDMS) directly to the first user terminal (UE1), the response message being an XCAP operation acknowledging the get message and including the voice mail history information on the first user terminal (UE1);
receive the response message comprising the voice mail history information in the first user terminal (UE1);
display the received voice mail history information to the user of the first user terminal (UE1); and
retrieve a selected voice mail message directly from the voice mail node (VMS) to the first user terminal (UE1) using a link to the selected voice mail message in the voice mail node (VMS), the link being comprised in the voice mail history information received in the first user terminal (UE1).

8. A system according to claim 7, **characterized in that** the voice mail system (VMS) is configured to provide the voice mail message by
utilizing a message transmitted between the voice mail node (VMS) and the first user terminal (UE1); and/or
playing the voice mail message during a call between the voice mail system (VMS) and the first user terminal (UE1).

9. A system according to claim 7 or 8, **characterized in that** the voice mail system (VMS) is configured to remove, in response to receiving a predetermined notification from the document management node (XDMS), the respective voice mail message from the voice mail node (VMS).

10. A system according to any one of claims 7 to 9, **characterized in that** the voice mail system (VMS) is configured to
delete, on the basis of predetermined criteria, a voice mail message from the voice mail node (VMS); and
transmit, in response to the deleting, a respective delete message to the document management node (XDMS), the delete message including information on the deleted voice mail message.

11. A first user terminal (UE1) for a wireless communications system (S) comprising an Internet protocol multimedia subsystem (IMS), a document management node (XDMS) and a voice mail node (VMS) capable of recording (7-1) a voice mail message (2-7) received from a second user terminal (UE2),
**characterized in that** the first user terminal (UE1) is configured to
receive a notify message as a session initiation protocol, SIP, message or a session initiation protocol for instant messaging and presence leveraging extensions, SIMPLE, message via the Internet protocol multimedia subsystem (IMS) from the document management node (XDMS);
transmit, in response to the receiving of the notify message originating from the document management node (XDMS), a get message as an extensible markup language configuration access protocol, XCAP, operation directly to the document management node (XDMS);
receive a response message directly from the document management node (XDMS), the response message being an XCAP operation acknowledging the get message and including voice mail history information on the first user terminal (UE1);
display (2-16, 5-9) the voice mail history information to the user of the first user terminal (UE1); and
retrieve, in response to recognising a predetermined action by the user, a selected voice mail message from the voice mail node (VMS) using a link to the selected voice mail message in the voice mail node, the link being comprised in the voice mail history information received in the first user terminal (UE1) from the document management node (XDMS).

12. A first user terminal (UE1) according to claim 11, **characterized in that** it is configured to
retrieve the voice mail message in a message transmitted between the voice mail node (VMS) and the first user terminal (UE1); and/or
play the voice mail message during a call between the voice mail system (VMS) and the first user terminal (UE1).

13. A first user terminal (UE1) according to any one of claims 11 and 12, **characterized in that** it is configured to transmit a first delete message to the document management node (XDMS), the first delete message including information on a voice mail entry to be removed from the voice mail history information.

14. A first user terminal (UE1) according to claim 13, **characterized in that** it is configured to transmit the first delete message in response to recognising a predetermined action by the user.

15. A first user terminal (UE1) according to claim 14, **characterized in that** it is configured to
receive a notification on a deleted voice mail entry from the document management node (XDMS);
transmit, in response to receiving the notification, a get message to the document management node (XDMS); and
receive a respond message from the document management node (XDMS), the respond message including updated voice mail history information on the respective user terminal (UE1).

16. A document management node (XDMS) of a wireless communications system (S) comprising an Internet protocol multimedia subsystem (IMS), the document management node (XDMS) and a voice mail node (VMS) capable of recording a voice mail message received from a second user terminal (UE2),
**characterized in that** the document management node (XDMS) is configured to
receive a put message as an extensible markup language configuration access protocol, XCAP, operation from the voice mail node (VMS), the put message including information on the recorded voice mail;
store, in response to receiving the put message, the information on the recorded voice mail to voice mail history information on a first user terminal (UE1), the voice mail history information comprising information on any voice mail messages directed to the first user terminal (UE1);
transmit, in response to said storing, a notify message as a session initiation protocol, SIP, message or and a session initiation protocol for instant messaging and presence leveraging extensions, SIMPLE, message via the Internet protocol multimedia subsystem (IMS) to the first user terminal (UE1);
receive a get message as an XCAP operation directly from the first user terminal (UE1); and
transmit, in response to the receiving of the get message, a response message to the first user terminal (UE1), the response message being an XCAP operation acknowledging the get message and including the voice mail history information on the first user terminal (UE1).

17. A document management node (XDMS) according to claim 16, **characterized in that** it is configured to
receive a first delete message from the first user terminal (UE1), the first delete message including information on a voice mail entry to be removed from the voice mail history information;
remove, in response to receiving the first delete message, the respective voice mail entry from the voice mail history information stored in the document management node (XDMS); and
on the basis of the removing, transmit a respective notification to the voice mail node (VMS).

18. A document management node (XDMS) according to claim 16 or 17, **characterized in that** it is configured to
receive a second delete message from the voice mail node (VMS);
delete, in response to receiving the second delete message, a respective voice mail entry from the voice mail history information stored in the document management node (XDMS);
transmit, in response to deleting the voice mail entry, a notification to the respective user terminal (UE1);
receive a get message from the respective user terminal (UE1); and
transmit, in response to receiving the get message, a respond message to the respective user terminal (UE1), the respond message including voice mail history information on the respective user terminal (UE1).

## Patentansprüche

1. Verfahren zum Bereitstellen eines Voicemail-Dienstes für ein erstes Benutzerendgerät (UE1) eines drahtlosen Kommunikationssystems (S), wobei das System (S) ein Internet Protocol Multimedia Subsystem (IMS), einen Document Management Node (XDMS) und einen Voice Mail Node (VMS) umfasst, der in der Lage ist, eine von einem zweiten Benutzerendgerät (UE2) empfangene Voicemail-Nachricht (2-7) aufzuzeichnen (7-1),
**dadurch gekennzeichnet, dass** das Verfahren umfasst:
als Reaktion auf das Aufzeichnen, Senden (7-2) einer Put-Nachricht (2-8) als eine Extensible Markup Language Configuration Access Protocol, XCAP, Operation von dem Voice Mail Node (VMS) an den Document Management Node (XDMS), wobei die Put-Nachricht Informationen über die aufgezeichnete Voicemail umfasst;
als Reaktion auf das Empfangen (6-5) der Put-Nachricht (2-8), Speichern (6-5) der Informationen über die aufgezeichnete Voicemail in Voicemail-Verlaufsinformationen über das erste Benutzerendgerät (UE1) in dem Document Management Node (XDMS);
als Reaktion auf das Speichern, Senden (6-7) einer Notify-Nachricht (2-10, 2-11) als eine Session Initiation Protocol, SIP, Nachricht oder eine Session Initiation Protocol for Instant Messaging and Presence Leveraging Extensions, SIMPLE, Nachricht von dem Document Management Node (XDMS) über das Internet Protocol Multimedia Subsystem (IMS) an das erste Benutzerendgerät (UE1);
als Reaktion auf das Empfangen (5-5) der Notify-Nachricht (2-10, 2-11), Senden (5-7) einer Get-Nachricht (2-14) als eine XCAP-Operation von dem ersten Benutzerendgerät (UE1) direkt an den Document Management Node (XDMS);
als Reaktion auf das Empfangen (6-9) der Get-Nachricht (2-14), Senden (6-10) einer Antwortnachricht (2-15) von dem Document Management Node (XDMS) direkt an das erste Benutzerendgerät (UE1), wobei die Antwortnachricht eine XCAP-Operation ist, die die Get-Nachricht bestätigt und die Voicemail-Verlaufsinformationen über das erste Benutzerendgerät umfasst (UE1);
Empfangen (2-16, 5-9) der Antwortnachricht, die die Voicemail-Verlaufsinformationen umfasst, in dem ersten Benutzerendgerät (UE1);
als Reaktion auf das Empfangen (2-16, 5-9) der Antwortnachricht, Anzeigen (2-16, 5-9) der empfangenen Voicemail-Verlaufsinformationen für den Benutzer des ersten Benutzerendgeräts (UE1); und
als Reaktion auf das Erkennen einer vorbestimmten Aktion durch den Benutzer, Abrufen (2-17, 5-10) einer ausgewählten Voicemail-Nachricht von dem Voice Mail Node (VMS) auf das erste Benutzerendgerät (UE1) unter Verwendung einer Verknüpfung zu der ausgewählten Voicemail-Nachricht in dem Voice Mail Node (VMS), wobei die Verknüpfung in den in dem ersten Benutzerendgerät (UE1) von dem Document Management Node (XDMS) empfangenen Voicemail-Verlaufsinformationen enthalten ist.

2. Verfahren nach Anspruch 1, **gekennzeichnet durch**:
Abrufen (2-17, 5-10) der Voicemail-Nachricht in einer zwischen dem Voice Mail Node (VMS) und dem ersten Benutzerendgerät (UE1) gesendeten Nachricht; und/oder
Abspielen (2-17, 5-10) der Voicemail-Nachricht während eines Anrufs zwischen dem Voice Mail System (VMS) und dem ersten Benutzerendgerät (UE1).

3. Verfahren nach Anspruch 1 oder 2, **gekennzeichnet durch**
Senden (5-11) einer ersten Delete-Nachricht (3-1) von dem ersten Benutzerendgerät (UE1) an den Document Management Node (XDMS), wobei die erste Delete-Nachricht Informationen über einen von den Voicemail-Verlaufsinformationen zu entfernenden Voicemail-Eintrag umfasst;
als Reaktion auf das Empfangen (3-2, 6-11) der ersten Delete-Nachricht (3-1), Entfernen (3-2, 6-11) des entsprechenden Voicemail-Eintrags von den in dem Document Management Node (XDMS) gespeicherten Voicemail-Verlaufsinformationen;
basierend auf dem Entfernen, Senden (6-14) einer Benachrichtigung (3-4) von dem Document Management Node (XDMS) an den Voice Mail Node (VMS); und
als Reaktion auf das Empfangen (3-5) der Benachrichtigung (3-4) in dem Voice Mail Node (VMS), Entfernen (7-6) der entsprechenden Voicemail-Nachricht (VMS) von dem Voice Mail Node (VMS).

4. Verfahren nach einem der Ansprüche 1 bis 3, **gekennzeichnet durch**:
basierend auf vorbestimmten Kriterien, Löschen (4-1, 7-7) einer Voicemail-Nachricht von dem Voice Mail Node (VMS);
als Reaktion auf das Löschen (4-1), Senden (7-8) einer zweiten Delete-Nachricht (4-2) von dem Voice Mail Node (VMS) an den Document Management Node (XDMS);
als Reaktion auf das Empfangen (6-15) der zweiten Delete-Nachricht (4-2), Löschen (4-3, 6-16) eines entsprechenden Voicemail-Eintrags von den in dem Document Management Node (XDMS) gespeicherten Voicemail-Verlaufsinformationen;
als Reaktion auf das Löschen (4-3, 6-16) des Voicemail-Eintrags, Senden (6-18) einer entsprechenden Benachrichtigung (4-5, 4-6) an das entsprechende Benutzerendgerät (UE1);
als Reaktion auf das Empfangen (5-13) der entsprechenden Benachrichtigung (4-5, 4-6), Senden (5-15) einer Get-Nachricht (4-9) von dem entsprechenden Benutzerendgerät (UE1) an den Document Management Node (XDMS);
als Reaktion auf das Empfangen (6-20) der Get-Nachricht (4-9), Senden (6-21) einer Antwortnachricht (4-10) von dem Document Management Node (XDMS) an das entsprechende Benutzerendgerät (UE1), wobei die Antwortnachricht Voicemail-Verlaufsinformationen über das entsprechende Benutzerendgerät (UE1) umfasst.

5. Verfahren nach einem der Ansprüche 1 bis 4, **gekennzeichnet durch** Aktualisieren eines in dem Document Management Node (XDMS) gespeicherten benutzerendgerätspezifischen Voicemail-Verlaufsdokuments; und
Bereitstellen des aktualisierten Voicemail-Verlaufsdokuments an das erste Benutzerendgerät.

6. Verfahren nach einem der Ansprüche 1 bis 5, **gekennzeichnet durch**:
Senden (5-1) einer Subscribe-Nachricht (2-1, 2-2) von dem ersten Benutzerendgerät (UE1) an den Document Management Node (XDMS); und
als Reaktion auf das Empfangen (6-1) der Subscribe-Nachricht in dem Document Management Node (XDMS), Erzeugen eines Voicemail-Verlaufsdokuments für das erste Benutzerendgerät (UE1), wobei das Verfahren umfasst:
als Reaktion auf das Empfangen (6-3) einer Get-Nachricht (2-5) in dem Document Management Node (XDMS) von dem ersten Benutzerendgerät (UE1), Senden des erzeugten Voicemail-Verlaufsdokuments an das erste Benutzerendgerät (UE1).

7. Drahtloses Kommunikationssystem (S), das ein Internet Protocol Multimedia Subsystem (IMS), einen Document Management Node (XDMS) und einen Voice Mail Node (VMS) umfasst, der in der Lage ist, eine an ein erstes Benutzerendgerät gerichtete und von einem zweiten Benutzerendgerät (UE2) empfangene Voicemail-Nachricht (2-7) aufzuzeichnen (7-1),
**dadurch gekennzeichnet, dass** das System (S) ausgestaltet ist zum:
als Reaktion auf das Aufzeichnen, Senden einer Put-Nachricht als eine Extensible Markup Language Configuration Access Protocol, XCAP, Operation von dem Voice Mail Node (VMS) an den Document Management Node (XDMS), wobei die Put-Nachricht Informationen über die aufgezeichnete Voicemail umfasst;
als Reaktion auf das Empfangen der Put-Nachricht, Speichern der Informationen über die aufgezeichnete Voicemail in Voicemail-Verlaufsinformationen über das erste Benutzerendgerät (UE1) in dem Document Management Node (XDMS);
als Reaktion auf das Speichern, Senden einer Notify-Nachricht als eine Session Initiation Protocol, SIP, Nachricht oder eine Session Initiation Protocol for Instant Messaging and Presence Leveraging Extensions, SIMPLE, Nachricht von dem Document Management Node (XDMS) über das Internet Protocol Multimedia Subsystem (IMS) an das erste Benutzerendgerät (UE1);
als Reaktion auf das Empfangen der Notify-Nachricht, Senden einer Get-Nachricht als eine XCAP-Operation von dem ersten Benutzerendgerät (UE1) direkt an den Document Management Node (XDMS);
als Reaktion auf das Empfangen der Get-Nachricht, Senden einer Antwortnachricht von dem Document Management Node (XDMS) direkt an das erste Benutzerendgerät (UE1), wobei die Antwortnachricht eine XCAP-Operation ist, die die Get-Nachricht bestätigt und die Voicemail-Verlaufsinformationen über das erste Benutzerendgerät (UE1) umfasst;
Empfangen der Antwortnachricht, die die Voicemail-Verlaufsinformationen umfasst, in dem ersten Benutzerendgerät (UE1);
Anzeigen der empfangenen Voicemail-Verlaufsinformationen für den Benutzer des ersten Benutzerendgeräts (UE1); und
Abrufen einer ausgewählten Voicemail-Nachricht direkt von dem Voice Mail Node (VMS) auf das erste Benutzerendgerät (UE1) unter Verwendung einer Verknüpfung zu der ausgewählten Voicemail-Nachricht in dem Voice Mail Node (VMS), wobei die Verknüpfung in den in dem ersten Benutzerendgerät (UE1) empfangenen Voicemail-Verlaufsinformationen enthalten ist.

8. System nach Anspruch 7, **dadurch gekennzeichnet, dass** das Voice Mail System (VMS) ausgestaltet ist, um die Voicemail-Nachricht bereitzustellen durch:
Nutzen einer zwischen dem Voice Mail Node (VMS) und dem ersten Benutzerendgerät (UE1) gesendeten Nachricht; und/oder
Abspielen der Voicemail-Nachricht während eines Anrufs zwischen dem Voice Mail System (VMS) und dem ersten Benutzerendgerät (UE1).

9. System nach Anspruch 7 oder 8, **dadurch gekennzeichnet, dass** das Voice Mail System (VMS) ausgestaltet ist, um als Reaktion auf das Empfangen einer vorbestimmten Benachrichtigung von dem Document Management Node (XDMS) die entsprechende Voicemail-Nachricht von dem Voice Mail Node (VMS) zu entfernen.

10. System nach einem der Ansprüche 7 bis 9, **dadurch gekennzeichnet, dass** das Voice Mail System (VMS) ausgestaltet ist zum:
basierend auf vorbestimmten Kriterien, Löschen einer Voicemail-Nachricht von dem Voice Mail Node (VMS); und
als Reaktion auf das Löschen, Senden einer entsprechenden Delete-Nachricht an den Document Management Node (XDMS), wobei die Delete-Nachricht Informationen über die gelöschte Voicemail-Nachricht umfasst.

11. Erstes Benutzerendgerät (UE1) für ein drahtloses Kommunikationssystem (S), das ein Internet Protocol Multimedia Subsystem (IMS), einen Document Management Node (XDMS) und einen Voice Mail Node (VMS) umfasst, der in der Lage ist, eine von einem zweiten Benutzerendgerät (UE2) empfangene Voicemail-Nachricht (2-7) aufzuzeichnen (7-1),
**dadurch gekennzeichnet, dass** das erste Benutzerendgerät (UE1) ausgestaltet ist zum:
Empfangen einer Notify-Nachricht als eine Session Initiation Protocol, SIP, Nachricht oder eine Session Initiation Protocol for Instant Messaging and Presence Leveraging Extensions, SIMPLE, Nachricht über das Internet Protocol Multimedia Subsystem (IMS) von dem Document Management Node (XDMS);
als Reaktion auf das Empfangen der Notify-Nachricht, die von dem Document Management Node (XDMS) stammt, Senden einer Get-Nachricht als eine Extensible Markup Language Configuration Access Protocol, XCAP, Operation direkt an den Document Management Node (XDMS);
Empfangen einer Antwortnachricht direkt von dem Document Management Node (XDMS), wobei die Antwortnachricht eine XCAP-Operation ist, die die Get-Nachricht bestätigt und Voicemail-Verlaufsdaten über das erste Benutzerendgerät (UE1) umfasst;
Anzeigen (2-16, 5-9) der Voicemail-Verlaufsinformationen für den Benutzer des ersten Benutzerendgeräts (UE1); und
als Reaktion auf das Erkennen einer vorbestimmten Aktion durch den Benutzer, Abrufen einer ausgewählten Voicemail-Nachricht von dem Voice Mail Node (VMS) unter Verwendung einer Verknüpfung zu der ausgewählten Voicemail-Nachricht in dem Voice Mail Node, wobei die Verknüpfung in den in dem ersten Benutzerendgerät (UE1) von dem Document Management Node (XDMS) empfangenen Voicemail-Verlaufsinformationen enthalten ist.

12. Erstes Benutzerendgerät (UE1) nach Anspruch 11, **dadurch gekennzeichnet, dass** es ausgestaltet ist zum:
Abrufen der Voicemail-Nachricht in einer zwischen dem Voice Mail Node (VMS) und dem ersten Benutzerendgerät (UE1) gesendeten Nachricht; und/oder
Abspielen der Voicemail-Nachricht während eines Anrufs zwischen dem Voice Mail System (VMS) und dem ersten Benutzerendgerät (UE1).

13. Erstes Benutzerendgerät (UE1) nach einem der Ansprüche 11 und 12, **dadurch gekennzeichnet, dass** es ausgestaltet ist, um eine erste Delete-Nachricht an den Document Management Node (XDMS) zu senden, wobei die erste Delete-Nachricht Informationen über einen von den Voicemail-Verlaufsinformationen zu entfernenden Voicemail-Eintrag umfasst.

14. Erstes Benutzerendgerät (UE1) nach Anspruch 13, **dadurch gekennzeichnet, dass** es ausgestaltet ist, um die erste Delete-Nachricht als Reaktion auf das Erkennen einer vorbestimmten Aktion durch den Benutzer zu senden.

15. Erstes Benutzerendgerät (UE1) nach Anspruch 14, **dadurch gekennzeichnet, dass** es ausgestaltet ist zum:
Empfangen einer Benachrichtigung über einen gelöschten Voicemail-Eintrag von dem Document Management Node (XDMS);
als Reaktion auf das Empfangen der Benachrichtigung, Senden einer Get-Nachricht an den Document Management Node (XDMS); und
Empfangen einer Antwortnachricht von dem Document Management Node (XDMS), wobei die Antwortnachricht aktualisierte Voicemail-Verlaufsinformationen über das entsprechende Benutzerendgerät (UE1) umfasst.

16. Document Management Node (XDMS) eines drahtlosen Kommunikationssystems (S), das ein Internet Protocol Multimedia Subsystem (IMS), den Document Management Node (XDMS) und einen Voice Mail Node (VMS) umfasst, der in der Lage ist, eine von einem zweiten Benutzerendgerät (UE2) empfangene Voicemail-Nachricht aufzuzeichnen,
**dadurch gekennzeichnet, dass** der Document Management Node (XDMS) ausgestaltet ist zum:
Empfangen einer Put-Nachricht als eine Extensible Markup Language Configuration Access Protocol, XCAP, Operation von dem Voice Mail Node (VMS), wobei die Put-Nachricht Informationen über die aufgezeichnete Voicemail umfasst;
als Reaktion auf das Empfangen der Put-Nachricht, Speichern der Informationen über die aufgezeichnete Voicemail in Voicemail-Verlaufsinformationen über ein erstes Benutzerendgerät (UE1), wobei die Voicemail-Verlaufsinformationen Informationen über Voicemail-Nachrichten umfassen, die an das erste Benutzerendgerät (UE1) gerichtet sind;
als Reaktion auf das Speichern, Senden einer Notify-Nachricht als eine Session Initiation Protocol, SIP, Nachricht oder und eine Session Initiation Protocol for Instant Messaging and Presence Leveraging Extensions, SIMPLE, Nachricht über das Internet Protocol Multimedia Subsystem (IMS) an das erste Benutzerendgerät (UE1);
Empfangen einer Get-Nachricht als eine XCAP-Operation direkt von dem ersten Benutzerendgerät (UE1); und
als Reaktion auf das Empfangen der Get-Nachricht, Senden einer Antwortnachricht an das erste Benutzerendgerät (UE1), wobei die Antwortnachricht eine XCAP-Operation ist, die die Get-Nachricht bestätigt und die Voicemail-Verlaufsinformationen über das erste Benutzerendgerät (UE1) umfasst.

17. Document Management Node (XDMS) nach Anspruch 16, **dadurch gekennzeichnet, dass** er ausgestaltet ist zum:
Empfangen einer ersten Delete-Nachricht von dem ersten Benutzerendgerät (UE1), wobei die erste Delete-Nachricht Informationen über einen von den Voicemail-Verlaufsinformationen zu entfernenden Voicemail-Eintrag umfasst;
als Reaktion auf das Empfangen der ersten Delete-Nachricht, Entfernen des entsprechenden Voicemail-Eintrags von den in dem Document Management Node (XDMS) gespeicherten Voicemail-Verlaufsinformationen; und
basierend auf dem Entfernen, Senden einer entsprechenden Benachrichtigung an den Voice Mail Node (VMS).

18. Document Management Node (XDMS) nach Anspruch 16 oder 17, **dadurch gekennzeichnet, dass** er ausgestaltet ist zum:
Empfangen einer zweiten Delete-Nachricht von dem Voice Mail Node (VMS);
als Reaktion auf das Empfangen der zweiten Delete-Nachricht, Löschen eines entsprechenden Voicemail-Eintrags von den in dem Document Management Node (XDMS) gespeicherten Voicemail-Verlaufsinformationen;
als Reaktion auf das Löschen des Voicemail-Eintrags, Senden einer Benachrichtigung an das entsprechende Benutzerendgerät (UE1);
Empfangen einer Get-Nachricht von dem entsprechenden Benutzerendgerät (UE1); und
als Reaktion auf das Empfangen der Get-Nachricht, Senden einer Antwortnachricht an das entsprechende Benutzerendgerät (UE1), wobei die Antwortnachricht Voicemail-Verlaufsinformationen über das entsprechende Benutzerendgerät (UE1) umfasst.

## Revendications

1. Procédé de fourniture d'un service de messagerie vocale à un premier terminal d'utilisateur (UE1) d'un système de communication sans fil (S), le système (S) comprenant un sous-système multimédia de protocole Internet (IMS), un nœud de gestion de documents (XDMS) et un nœud de messagerie vocale (VMS) pouvant enregistrer (7-1) un message vocal (2-7) reçu à partir d'un second terminal d'utilisateur (UE2),
**caractérisé en ce que** le procédé comprend les étapes consistant à
transmettre (7-2), en réponse audit enregistrement, un message d'envoi (2-8) sous la forme d'une opération de protocole d'accès à une configuration de langage de balisage extensible, XCAP, du nœud de messagerie vocale (VMS) au nœud de gestion de documents (XDMS), où le message d'envoi comporte des informations sur la messagerie vocale enregistrée ;
stocker (6-5), en réponse à la réception (6-5) du message d'envoi (2-8), les informations sur la messagerie vocale enregistrée dans les informations d'historique de messagerie vocale sur le premier terminal d'utilisateur (UE1) dans le nœud de gestion de documents (XDMS) ;
transmettre (6-7), en réponse audit stockage, un message de notification (2-10, 2-11) sous la forme d'un message de protocole d'ouverture de session, SIP, ou d'un protocole d'ouverture de session pour un message de messagerie instantanée et d'extensions d'exploitation de présence, SIMPLE, à partir du nœud de gestion de documents (XDMS) via le sous-système multimédia de protocole Internet (IMS) au premier terminal d'utilisateur (UE1) ;
transmettre (5-7), en réponse à la réception (5-5) du message de notification (2-10, 2-11), un message de réception (2-14) sous la forme d'une opération XCAP du premier terminal d'utilisateur (UE1) directement au nœud de gestion de documents (XDMS) ;
transmettre (6-10), en réponse à la réception (6-9) du message de réception (2-14), un message de réponse (2-15) du nœud de gestion de documents (XDMS) directement au premier terminal d'utilisateur (UE1), où le message de réponse est une opération XCAP accusant réception du message de réception et comportant les informations d'historique de messagerie vocale sur le premier terminal d'utilisateur (UE1) ;
recevoir (2-16, 5-9) le message de réponse comprenant les informations d'historique de messagerie vocale sur le premier terminal d'utilisateur (UE1) ;
afficher (2-16, 5-9), en réponse à la réception (2-16, 5-9) du message de réponse, les informations d'historique de messagerie vocale reçues à l'utilisateur du premier terminal d'utilisateur (UE1) ; et
récupérer (2-17, 5-10), en réponse à l'accusé de réception d'une action prédéterminée par l'utilisateur, un message vocal sélectionné à partir du nœud de messagerie vocale (VMS) au premier terminal d'utilisateur (UE1) en utilisant un lien vers le message vocal sélectionné dans le nœud de messagerie vocale (VMS), le lien étant compris dans les informations d'historique de messagerie vocale reçues sur le premier terminal d'utilisateur (UE1) à partir du nœud de gestion de documents (XDMS).

2. Procédé selon la revendication 1, **caractérisé en ce qu'**il
récupère (2-17, 5-10) le message vocal dans un message transmis entre le nœud de messagerie vocale (VMS) et le premier terminal d'utilisateur (UE1) ; et/ou
passe (2-17, 5-10) le message vocal pendant un appel entre le système de messagerie vocale (VMS) et le premier terminal d'utilisateur (UE1).

3. Procédé selon la revendication 1 ou 2, **caractérisé en ce qu'**il
transmet (5-11) un premier message de suppression (3-1) à partir du premier terminal d'utilisateur (UE1) au nœud de gestion de documents (XDMS), où le premier message de suppression comporte des informations sur une entrée de messagerie vocale à supprimer des informations d'historique de messagerie vocale ;
supprime (3-2, 6-11), en réponse à la réception (3-2, 6-11) du premier message de suppression (3-1), l'entrée de messagerie vocale respective des informations d'historique de messagerie vocale stockées dans le nœud de gestion de documents (XDMS) ;
transmet (6-14), sur la base de la suppression, une notification (3-4) du nœud de gestion de documents (XDMS) au nœud de messagerie vocale (VMS) ; et
supprime (7-6), en réponse à la réception (3-5) de la notification (3-4) sur le nœud de messagerie vocale (VMS), le message vocal respectif du nœud de messagerie vocale (VMS).

4. Procédé selon l'une quelconque des revendications 1 à 3, **caractérisé en ce qu'**il
efface (4-1, 7-7), sur la base de critères prédéterminés, un message vocal du nœud de messagerie vocale (VMS) ;
transmet (7-8), en réponse à l'effacement (4-1), un second message de suppression (4-2) du nœud de messagerie vocale (VMS) au nœud de gestion de documents (XDMS) ;
efface (4-3, 6-16), en réponse à la réception (6-15) du second message de suppression (4-2), une entrée de messagerie vocale respective des informations d'historique de messagerie vocale stockées dans le nœud de gestion de documents (XDMS) ;
transmet (6-18) en réponse à l'effacement (4-3, 6-16) de l'entrée de messagerie vocale, une notification respective (4-5, 4-6) au terminal d'utilisateur (UE1) respectif ;
transmet (5-15), en réponse à la réception (5-13) de ladite notification respective (4-5, 4-6), un message de réception (4-9) à partir du terminal d'utilisateur (UE1) respectif au nœud de gestion de documents (XDMS) ;
transmet (6-21), en réponse à la réception (6-20) du message de réception (4-9), un message de réponse (4-10) du nœud de gestion de documents (XDMS) au terminal d'utilisateur (UE1) respectif, le message de réponse comportant des informations d'historique de messagerie vocale sur le terminal d'utilisateur (UE1) respectif.

5. Procédé selon l'une quelconque des revendications 1 à 4, **caractérisé en ce qu'**il met à jour un document d'historique de messagerie vocale spécifique à un terminal d'utilisateur dans le nœud de gestion de documents (XDMS) ; et
fournit le document d'historique de messagerie vocale mis à jour au premier terminal d'utilisateur.

6. Procédé selon l'une quelconque des revendications 1 à 5, **caractérisé en ce qu'**il
transmet (5-1) un message d'abonnement (2-1, 2-2) du premier terminal d'utilisateur (UE1) au nœud de gestion de documents (XDMS) ; et
crée, en réponse à la réception (6-1) du message d'abonnement dans le nœud de gestion de documents (XDMS), un document d'historique de messagerie vocale pour le premier terminal d'utilisateur (UE1), dans lequel le procédé comprend l'étape consistant à
transmettre, en réponse à la réception (6-3) d'un message de réception (2-5) sur le nœud de gestion de documents (XDMS) du premier terminal d'utilisateur (UE1), le document d'historique de messagerie vocale créé au premier terminal d'utilisateur (UE1).

7. Système de communication sans fil (S) comprenant un sous-système multimédia de protocole Internet (IMS), un nœud de gestion de documents (XDMS) et un nœud de messagerie vocale (VMS) pouvant enregistrer (7-1) un message vocal (2-7) dirigé vers un premier terminal d'utilisateur et reçu à partir d'un second terminal d'utilisateur (UE2),
**caractérisé en ce que** le système (S) est configuré pour
transmettre, en réponse audit enregistrement, un message d'envoi sous la forme d'une opération de protocole d'accès à une configuration de langage de balisage extensible, XCAP, du nœud de messagerie vocale (VMS) au nœud de gestion de documents (XDMS), où le message d'envoi comporte des informations sur la messagerie vocale enregistrée ;
stocker, en réponse à la réception du message d'envoi, les informations sur la messagerie vocale enregistrées dans les informations d'historique de messagerie vocale sur le premier terminal d'utilisateur (UE1) dans le nœud de gestion de documents (XDMS) ;
transmettre, en réponse audit stockage, un message de notification sous la forme d'un message de protocole d'ouverture de session, SIP, ou d'un protocole d'ouverture de session pour un message de messagerie instantanée et d'extensions d'exploitation de présence, SIMPLE, du nœud de gestion de documents (XDMS) via le sous-système multimédia de protocole Internet (IMS) au premier terminal d'utilisateur (UE1) ;
transmettre, en réponse à la réception du message de notification, un message de réception sous la forme d'une opération XCAP du premier terminal d'utilisateur (UE1) directement au nœud de gestion de documents (XDMS) ;
transmettre, en réponse à la réception du message de réception, un message de réponse du nœud de gestion de documents (XDMS) directement au premier terminal d'utilisateur (UE1), où le message de réponse est une opération XCAP accusant réception du message de réception et comportant les informations d'historique de messagerie vocale sur le premier terminal d'utilisateur (UE1) ;
recevoir le message de réponse comprenant les informations d'historique de messagerie vocale sur le premier terminal d'utilisateur (UE1) ;
afficher les informations d'historique de messagerie vocale reçues à l'utilisateur du premier terminal d'utilisateur (UE1) ; et
récupérer un message vocal sélectionné directement du nœud de messagerie vocale (VMS) au premier terminal d'utilisateur (UE1) en utilisant un lien vers le message vocal sélectionné dans le nœud de messagerie vocale (VMS), le lien étant compris dans les informations d'historique de messagerie vocale reçues sur le premier terminal d'utilisateur (UE1).

8. Système selon la revendication 7, **caractérisé en ce que** le système de messagerie vocale (VMS) est configuré pour fournir le message vocal en
utilisant un message transmis entre le nœud de messagerie vocale (VMS) et le premier terminal d'utilisateur (UE1) ; et/ou
passant le message vocal pendant un appel entre le système de messagerie vocale (VMS) et le premier terminal d'utilisateur (UE1).

9. Système selon la revendication 7 ou 8, **caractérisé en ce que** le système de messagerie vocale (VMS) est configuré pour supprimer, en réponse à la réception d'une notification prédéterminée à partir du nœud de gestion de documents (XDMS), le message vocal respectif du nœud de messagerie vocale (VMS).

10. Système selon l'une quelconque des revendications 7 à 9, **caractérisé en ce que** le système de messagerie vocale (VMS) est configuré pour
effacer, sur la base de critères prédéterminés, un message vocal du nœud de messagerie vocale (VMS) ; et
transmettre, en réponse à l'effacement, un message d'effacement respectif au nœud de gestion de documents (XDMS), où le message d'effacement comporte des informations sur la messagerie vocale effacée.

11. Premier terminal d'utilisateur (UE1) pour un système de communication sans fil (S) comprenant un sous-système multimédia de protocole Internet (IMS), un nœud de gestion de documents (XDMS) et un nœud de messagerie vocale (VMS) pouvant enregistrer (7-1) un message vocal (2-7) reçu à partir d'un second terminal d'utilisateur (UE2),
**caractérisé en ce que** le premier terminal d'utilisateur (UE1) est configuré pour
recevoir un message de notification sous la forme d'un message de protocole d'ouverture de session, SIP, ou d'un protocole d'ouverture de session pour un message de messagerie instantanée et d'extensions d'exploitation de présence, SIMPLE, via le sous-système multimédia de protocole Internet (IMS) à partir du nœud de gestion de documents (XDMS) ;
transmettre, en réponse à la réception du message de notification à partir du nœud de gestion de documents (XDMS), un message de réception sous la forme d'une opération de protocole d'accès à une configuration de langage de balisage extensible, XCAP, directement au nœud de gestion de documents (XDMS) ;
recevoir un message de réponse directement à partir du nœud de gestion de documents (XDMS), où le message de réponse est une opération XCAP accusant réception du message de réception et comportant des informations d'historique de messagerie vocale sur le premier terminal d'utilisateur (UE1) ;
afficher (2-16, 5-9) les informations d'historique de messagerie vocale à l'utilisateur du premier terminal d'utilisateur (UE1) ; et
récupérer, en réponse à l'accusé de réception d'une action prédéterminée par l'utilisateur, un message vocal sélectionné à partir du nœud de messagerie vocale (VMS) en utilisant un lien vers le message vocal sélectionné dans le nœud de messagerie vocale, le lien étant compris dans les informations d'historique de messagerie vocale reçues sur le premier terminal d'utilisateur (UE1) à partir du nœud de gestion de documents (XDMS).

12. Premier terminal d'utilisateur (UE1) selon la revendication 11, **caractérisé en ce qu'**il est configuré pour
récupérer le message vocal dans un message transmis entre le nœud de messagerie vocale (VMS) et le premier terminal d'utilisateur (UE1) ; et/ou
passer le message vocal pendant un appel entre le système de messagerie vocale (VMS) et le premier terminal d'utilisateur (UE1).

13. Premier terminal d'utilisateur (UE1) selon l'une quelconque des revendications 11 et 12, **caractérisé en ce qu'**il est configuré pour transmettre un premier message de suppression au nœud de gestion de documents (XDMS), où le premier message de suppression comporte des informations sur un entrée de messagerie vocale à supprimer des informations d'historique de messagerie vocale.

14. Premier terminal d'utilisateur (UE1) selon la revendication 13, **caractérisé en ce qu'**il est configuré pour transmettre le premier message de suppression en réponse à l'accusé de réception d'une action prédéterminée par l'utilisateur.

15. Premier terminal d'utilisateur (UE1) selon la revendication 14, **caractérisé en ce qu'**il est configuré pour
recevoir une notification sur une entrée de messagerie vocale effacée du nœud de gestion de documents (XDMS) ;
transmettre, en réponse à la réception de la notification, un message de réception au nœud de gestion de documents (XDMS) ; et
recevoir un message de réponse à partir du nœud de gestion de documents (XDMS), le message de réponse comportant des informations d'historique de messagerie vocale mises à jour sur le terminal d'utilisateur (UE1) respectif.

16. Nœud de gestion de documents (XDMS) d'un système de communication sans fil (S) comprenant un sous-système multimédia de protocole Internet (IMS), le nœud de gestion de documents (XDMS) et un nœud de messagerie vocale (VMS) pouvant enregistrer un message vocal reçu à partir d'un second terminal d'utilisateur (UE2),
**caractérisé en ce que** le nœud de gestion de documents (XDMS) est configuré pour
recevoir un message d'envoi sous la forme d'une opération de protocole d'accès à une configuration de langage de balisage extensible, XCAP, à partir du nœud de messagerie vocale (VMS), où le message d'envoi comporte des informations sur la messagerie vocale enregistrée ;
stocker, en réponse à la réception du message d'envoi, les informations sur la messagerie vocale enregistrées dans les informations d'historique de messagerie vocale sur un premier terminal d'utilisateur (UE1), les informations d'historique de messagerie vocale comprenant des informations sur toute messagerie vocale dirigée vers le premier terminal d'utilisateur (UE1) ;
transmettre, en réponse audit stockage, un message de notification sous la forme d'un message de protocole d'ouverture de session, SIP, ou d'un protocole d'ouverture de session pour un message de messagerie instantanée et d'extensions d'exploitation de présence, SIMPLE, via le sous-système multimédia de protocole Internet (IMS) au premier terminal d'utilisateur (UE1) ;
recevoir un message de réception sous la forme d'une opération XCAP directement à partir du premier terminal d'utilisateur (UE1) ; et
transmettre, en réponse à la réception du message de réception, un message de réponse au premier terminal d'utilisateur (UE1), où le message de réponse est une opération XCAP accusant réception du message de réception et comportant les informations d'historique de messagerie vocale sur le premier terminal d'utilisateur (UE1).

17. Nœud de gestion de documents (XDMS) selon la revendication 16, **caractérisé en ce qu'**il est configuré pour
recevoir un premier message de suppression à partir du premier terminal d'utilisateur (UE1), où le premier message de suppression comporte des informations sur une entrée de messagerie vocale à supprimer des informations d'historique de messagerie vocale ;
supprimer, en réponse à la réception du premier message de suppression, l'entrée de messagerie vocale respective des informations d'historique de messagerie vocale stockées dans le nœud de gestion de documents (XDMS) ; et
sur la base de la suppression, transmettre une notification respective au nœud de messagerie vocale (VMS).

18. Nœud de gestion de documents (XDMS) selon la revendication 16 ou 17, **caractérisé en ce qu'**il est configuré pour
recevoir un second message de suppression à partir du nœud de messagerie vocale (VMS) ;
effacer, en réponse à la réception du second message de suppression, une entrée de messagerie vocale respective des informations d'historique de messagerie vocale stockées dans le nœud de gestion de documents (XDMS) ;
transmettre, en réponse à l'effacement de l'entrée de messagerie vocale, une notification au terminal d'utilisateur (UE1) respectif ;
recevoir un message de réception à partir du terminal d'utilisateur (UE1) respectif ; et
transmettre, en réponse à la réception le message de réception, un message de réponse au terminal d'utilisateur (UE1) respectif, le message de réponse comportant des informations d'historique de messagerie vocale sur le terminal d'utilisateur (UE1) respectif.
